# EUROPEAN PATENT APPLICATION

(11) **EP 3 723 022 A1**
(43) Date of publication of application: **14.10.2020**
(21) Application number: 18886889.7
(22) Date of filing: 12.09.2018
(51) Int. Cl.: G06Q 30/06, G06K 7/10

(54) **TIRE-RENTAL MANAGEMENT DEVICE AND TIRE-RENTAL MANAGEMENT METHOD**

(30) Priority: 06.12.2017 JP 2017234626
(71) Applicant: Bridgestone Corporation, Tokyo 104-8340 (JP)
(72) Inventor: WATANABE Jun, Tokyo 104-8340 (JP); SUKEGAWA Shin, Tokyo 104-8340 (JP); OHARA Takayuki, Tokyo 104-8340 (JP); MATSUO Kenji, Tokyo 104-8340 (JP); YAMADA Kotaro, Tokyo 104-8340 (JP); HIRAJIMA Satoshi, Tokyo 104-8340 (JP); YAMAGUCHI Suguru, Tokyo 104-8340 (JP)
(74) Representative: Oxley, Robin John George
(86) International application number: PCT/JP2018/033880
(87) International publication number: WO 2019/111483

(57) **Abstract**

A tire rental management apparatus according to the present disclosure includes an input interface configured to accept input of a usage area and/or a usage period of a tire as a condition regarding rental of the tire to a user, and a controller configured to determine a tire in accordance with the usage area and/or the usage period input to the input interface as a rental tire among a plurality of tires for rental.

## Description

### TECHNICAL FIELD

The present disclosure relates to a tire rental management apparatus, and a tire rental management method.

### BACKGROUND

Among tires to be mounted on a vehicle, there are tires to which RFID (Radio-Frequency Identification) tags for performing near field communication are attached (see, for example, PTL 1).

### CITATION LIST

### Patent Literature

PTL 1: Japanese Patent Laid-Open No. 2017-132292

### SUMMARY

### (Technical Problem)

By the way, a service of renting tires to a user is being studied. Tire performance such as maneuverability and braking performance is affected by an environment where tires are used (such as rainfall and snowfall). In the service of renting tires as described above, it is necessary to rent tires which can be safely used by the user.

An object of the present disclosure which has been made in view of the above-described problem is to provide a tire rental management apparatus, and a tire rental management method which are capable of determining safer tires as rental tires among tires for rental in accordance with a usage environment by a user.

### (Solution to Problem)

A tire rental management apparatus as one aspect of the present disclosure is a tire rental management apparatus which determines a rental tire which is a tire to be rented to a user who desires to rent a tire, the tire rental management apparatus including an input interface configured to accept input of a usage area and/or a usage period of a tire as a condition regarding rental of the tire to the user, and a controller configured to determine a tire in accordance with the usage area and/or the usage period input to the input interface as the rental tire among a plurality of tires for rental.

A tire rental management method as one aspect of the present disclosure is a tire rental management method for determining a rental tire which is a tire to be rented to a user who desires to rent a tire, the tire rental management method including a step of accepting input of a usage area and/or a usage period of a tire as a condition regarding rental of the tire to the user, and a step of determining a tire in accordance with the input usage area and/or usage period as the rental tire among a plurality of tires for rental.

### (Advantageous Effect)

According to the present disclosure, it is possible to provide a tire rental management apparatus and a tire rental management method which are capable of determining safer tires as rental tires among tires for rental in accordance with a usage environment by a user.

### BRIEF DESCRIPTION OF THE DRAWINGS

In the accompanying drawings:
FIG. 1 is a view illustrating a configuration example of a tire rental management apparatus according to an embodiment of the present disclosure;
FIG. 2 is a view illustrating a configuration example of a memory illustrated in FIG. 1;
FIG. 3 is a flowchart illustrating an example of operation when rental history is stored in the memory illustrated in FIG. 1;
FIG. 4 is a flowchart illustrating an example of operation when traveling history is stored in the memory illustrated in FIG. 1; and
FIG. 5 is a flowchart illustrating an example of operation when rental tires are determined by the tire rental management apparatus illustrated in FIG. 1.

### DETAILED DESCRIPTION

An embodiment of the present disclosure will be described below with reference to the drawings. Note that, in the drawings, the same reference numerals indicate the same or equivalent components.

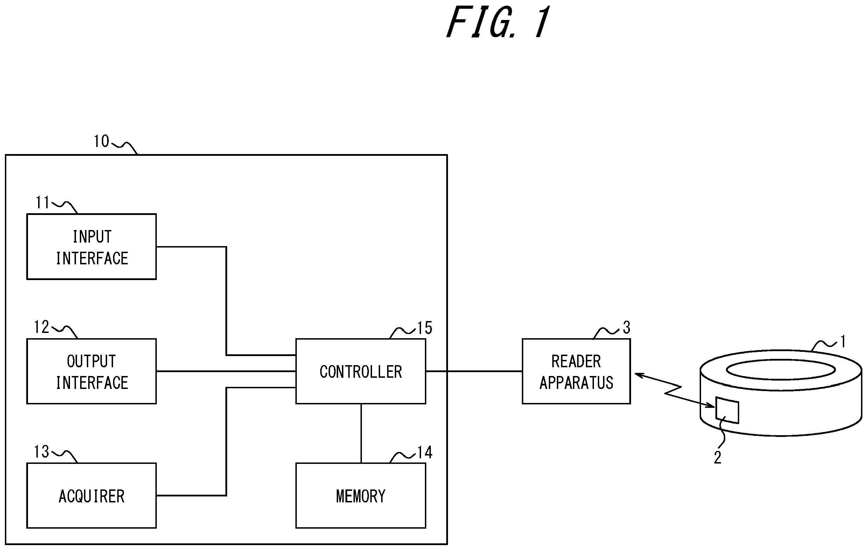

FIG. 1 is a view illustrating a configuration example of a tire rental management apparatus 10 according to an embodiment of the present disclosure. The tire rental management apparatus 10 according to the present embodiment is provided at a store, or the like, of a service provider who provides service of renting tires to a user who desires to rent tires, and determines candidate tires (hereinafter, referred to as rental tires) to be rented to the user among a plurality of tires 1 for rental.

The tire rental management apparatus 10 illustrated in FIG. 1 includes an input interface 11, an output interface 12, an acquirer 13, a memory 14, and a controller 15.

The input interface 11 accepts input of a condition regarding rental of tires to the user. Examples of the condition to be input to the input interface 11 can include a vehicle on which tires are to be mounted, a size of tires desired to be rented, a period during which tires are desired to be rented, a period during which tires are used (such as, for example, "only winter season"), frequency of use of tires (such as "driving every day" and "approximately several tens of kilometers a week"), a usage area of tires (such as whether or not the area is a snowfall area), a budget, or the like. The input interface 11 outputs the input condition to the controller 15. The input interface 11 accepts input of at least one of the usage area of tires (area where a vehicle on which the rented tires are mounted mainly travels) and a usage period of tires (period during which a vehicle on which the rented tires are mounted travels) as the condition regarding rental of tires to the user.

The output interface 12 outputs information, or the like, regarding the rental tires determined in accordance with the condition, or the like, input to the input interface 11. The output interface 12 is configured with, for example, a display, or the like.

The acquirer 13 performs wired communication or wireless communication with a vehicle on which the rental tires are mounted, to acquire traveling history in a rental period of the rental tires of the vehicle. The acquirer 13 acquires, for example, a traveling distance in the rental period, traveling speed, addition-subtraction speed, statuses where an accelerator pedal and a brake pedal are depressed, or the like, as the traveling history. Note that such traveling history can be acquired from various kinds of sensors mounted on the vehicle, an ECU (Electronic Control Unit) which controls operation of the vehicle, or the like. The acquirer 13 acquires traveling history from the vehicle, for example, upon return of the rental tires mounted on the vehicle, or the like.

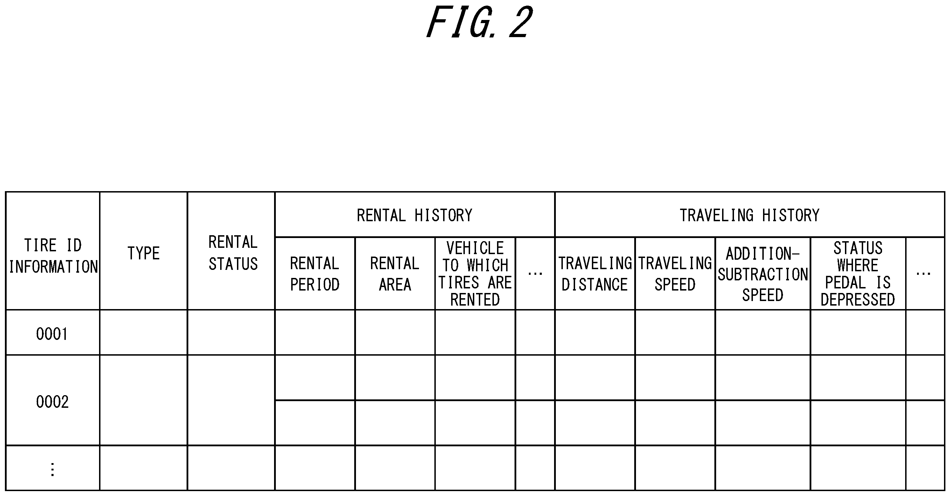

As illustrated in FIG. 2, the memory 14 stores rental history of the tires 1 in association with identification information for identifying the respective tires 1 for rental managed by the service provider (hereinafter, referred to as tire ID information). The memory 14 stores information such as, for example, a rental period of the tires 1, a rental area of the tires 1 (area where a vehicle to which the tires 1 are rented mainly travels), and a vehicle to which the tires are rented (vehicle on which the rented tires 1 are mounted) as the rental history of the tires 1. Information stored as the rental history is mainly information acquired from the condition regarding rental of tires to the user input to the input interface 11.

Further, as illustrated in FIG. 2, the memory 14 stores traveling history of the vehicle on which the tires 1 are mounted in the rental period of the tires 1 in association with the tire ID information of the respective tires 1 for rental. The memory 14 stores information such as, for example, a traveling distance in the rental period of the tires 1, traveling speed, addition-subtraction speed, and statuses where pedals are depressed as the traveling history of the tires 1. The information stored as the traveling history is mainly information acquired from the traveling history acquired by the acquirer 13.

Further, as illustrated in FIG. 2, the memory 14 stores types of the tires 1 in association with the tire ID information of the respective tires 1 for rental. Examples of the types of the tires 1 can include information such as a size of the tires 1 and whether or not the tires are for winter use. Further, the memory 14 stores information indicating a rental statuses of the tires 1 (whether or not the tires 1 are being rented) in association with the tire ID information of each of the tires 1 for rental. Note that the memory 14 stores rental history and traveling history for each time of rental for the tires 1 which are rented a plurality of times (in an example illustrated in FIG. 2, a tire having tire ID information of "0002"). With these kinds of information stored in the memory 14, it is possible to grasp the rental statuses and inventory statuses of the tires 1 for rental.

Note that, as illustrated in FIG. 1, it is assumed that a transmitter 2 is attached to the tire 1 for rental. The transmitter 2 is, for example, incorporated into the tire 1 (embedded in the tire 1 or pasted on an inner surface of the tire 1). Further, the transmitter 2 may be pasted on a surface of the tire 1 if a position where the transmitter 2 is attached is a position where the transmitter 2 is difficult to be removed from the tire 1, and a position where the transmitter 2 is not affected by contact between the tire 1 and a road surface. The transmitter 2 transmits a predetermined signal, for example, tire ID information of the tire 1 to which the transmitter 2 is attached. Specific examples of the transmitter 2 can include an RFID tag. The RFID tag performs near field (approximately several centimeters to several meters) communication with a reader apparatus using an electromagnetic field, a radio wave, or the like, to exchange information. As described above, in recent years, it is studied to attach an RFID tag to a tire.

The tire ID information transmitted by the transmitter 2 attached to the tire 1 can be read by a reader apparatus 3. The reader apparatus 3 inputs the read tire ID information to the controller 15.

The controller 15 controls overall operation of the tire rental management apparatus 10. For example, if a condition regarding rental of tires is input to the input interface 11, and the tires 1 are rented in accordance with the condition, the controller 15 causes rental history in accordance with the condition input to the input interface 11 to be stored in the memory 14 in association with the tire ID information of the tires 1. The tire ID information of the tires 1 is, for example, read by the reader apparatus 3 upon rental of the tires 1, and input to the controller 15.

Further, if the acquirer 13 acquires the traveling history from the vehicle on which the tires 1 are mounted upon return of the rented tires 1, or the like, the controller 15 causes the traveling history to be stored in the memory 14 in association with the tire ID information of the tires 1. The tire ID information of the tires 1 is, for example, read by the reader apparatus 3 when the tires 1 are returned, and input to the controller 15.

As described above, the transmitter 2 and the reader apparatus 3 perform near field communication in which a communication distance is several centimeters to several meters. Therefore, it is possible to acquire the tire ID information of the tires 1 by only bringing the reader apparatus 3 close to the transmitters 2 attached to the tires 1. Therefore, it becomes easy to acquire the tire ID information of the tires 1, so that it becomes easy to manage the tires 1 upon rental, return, or the like.

Further, the controller 15 determines rental tires which are tires to be rented to the user among the tires 1 for rental. Specifically, the controller 15 determines the tires 1 in accordance with at least one of the usage area and the usage period of the tires input to the input interface 11 as the condition regarding rental of tires among the tires 1 for rental, as rental tires.

Note that, while, in FIG. 1, description has been provided using an example where the tire rental management apparatus 10 includes the controller 15 and the memory 14, the present disclosure is not limited to this. For example, the memory 14 may be connected to a network to which the tire rental management apparatus 10 can be connected, and the controller 15 may access the memory 14 via the network as necessary.

Operation of the tire rental management apparatus 10 according to the present embodiment will be described next.

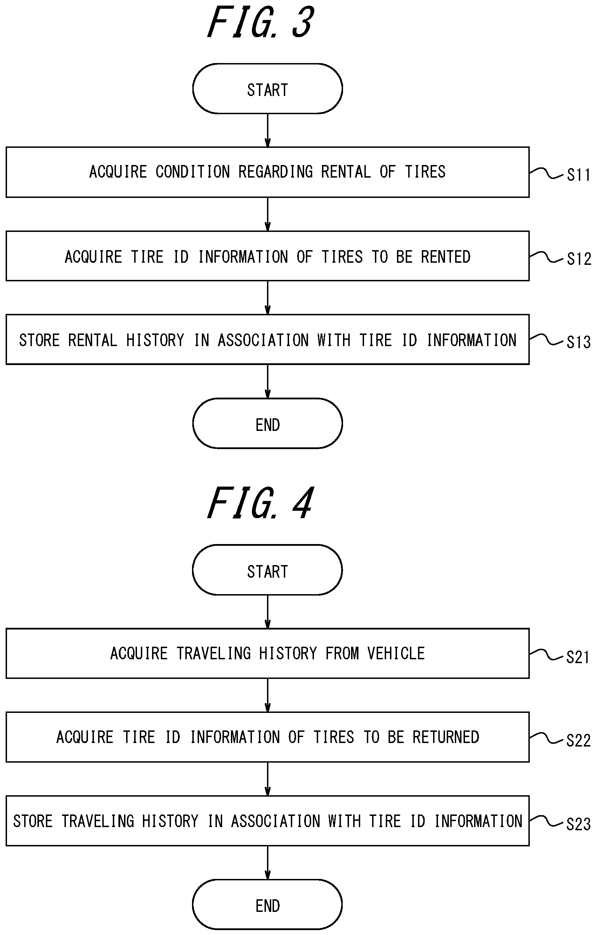

First, operation when the rental history and the traveling history are stored in the memory 14 will be described. FIG. 3 is a flowchart illustrating an example of the operation when the rental history is stored in the memory 14.

The controller 15 acquires the condition regarding rental of tires input to the input interface 11 (step S11). Further, the controller 15 acquires tire ID information of the tires 1 determined as the rental tires in accordance with the condition (step S12). The controller 15 acquires tire ID information of the tires 1 determined as the rental tires, for example, from the reader apparatus 3.

The controller 15 causes the rental history in accordance with the acquired condition regarding rental of tires to be stored in the memory 14 in association with the acquired tire ID information (step S13).

Operation when the traveling history is stored in the memory 14 will be described next. FIG. 4 is a flowchart illustrating an example of the operation when the traveling history is stored in the memory 14.

For example, if the acquirer 13 acquires the traveling history from the vehicle on which the tires 1 are mounted when the tires 1 rented to the user are returned, the controller 15 acquires the traveling history acquired by the acquirer 13 (step S21). Further, the controller 15 acquires tire ID information of the returned tires 1 (step S22). The controller 15 acquires the tire ID information of the returned tires 1, for example, from the reader apparatus 3.

The controller 15 causes the acquired traveling history to be stored in the memory 14 in association with the acquired tire ID information (step S23).

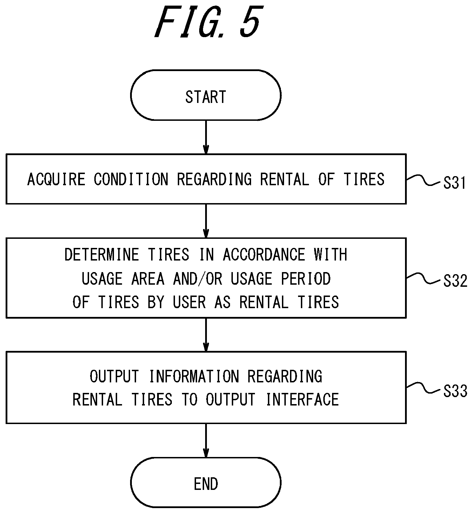

Operation when the rental tires are determined will be described next. FIG. 5 is a flowchart illustrating an example of operation of the tire rental management apparatus 10 when the rental tires are determined.

The controller 15 acquires the condition regarding rental of tires input to the input interface 11 (step S31). As described above, the condition regarding rental of tires includes at least one of the usage area and the usage period of the tires by the user.

The controller 15 determines the tires 1 in accordance with the usage area and/or the usage period of tires by the user as the rental tires among the tires 1 for rental (step S32). The controller 15, for example, stores tire performance of the tires 1 for rental, and determines tires having tire performance which is assumed to be required in the usage area and/or the usage period of the tires by the user, as the rental tires.

The controller 15 causes the output interface 12 to output information regarding the tires 1 determined as the rental tires (such as tire ID information of the tires 1 and cost for rental of the tires 1) (step S33).

By accepting input of at least one of the usage area and the usage period of the tires by the user and determining the tires 1 in accordance with the usage area and/or the usage period as the rental tires, it is possible to determine safer tires as the rental tires in accordance with a usage environment by the user.

A specific example of determination of the rental tires by the controller 15 will be described below.

For example, in a case where snowfall of an amount equal to or greater than an amount of snowfall set in advance is expected in the usage area and/or the usage period of the tires by the user, the controller 15 determines tires whose estimated remaining life is equal to or longer than a predetermined period as the rental tires among the tires 1 for rental. More specifically, the controller 15 determines tires having remaining life equal to or longer than a predetermined period during which tire performance (such as maneuverability and braking performance) equal to or higher than predetermined performance can be obtained even in a state where an amount of snowfall is equal to or greater than the amount of snowfall set in advance, as the rental tires. By this means, it is possible to determine tires 1 for which tire performance equal to or higher than the predetermined performance can be obtained even in a case where snowfall of an amount equal to or greater than the amount of snowfall set in advance is expected, as the rental tires.

Note that the remaining life is a period until an estimated timing at which tire performance equal to or higher than the predetermined performance can no longer be obtained. Typically, tire performance such as maneuverability and braking performance of the tires is affected by the remaining life of the tires. Further, the remaining life of the tires decreases in accordance with abrasion of the tires.

The controller 15, for example, estimates the remaining life of the respective tires 1 on the basis of the rental history of the tires 1 stored in the memory 14. The controller 15, for example, has data regarding an abrasion amount of the tires and change in the tire performance due to abrasion in a case where the tires are used in various conditions, in advance, and estimates the remaining life of the tires 1 for rental on the basis of this data.

Further, the controller 15 may estimate the remaining life of the tires 1 also using the traveling history as well as the rental history of the tires 1. The rental history of the tires 1 can be acquired on the service provider side from the condition regarding rental of tires input upon rental. However, during the rental period of the tires 1, it is difficult for the service provider side to grasp how the tires 1 are actually used. As described above, a degree of abrasion of the tires depends on how the tires are used. Therefore, there is a case where the remaining life cannot be estimated with high accuracy only from the rental history of the tires 1 obtained from the condition regarding the rental of the tires. By acquiring the traveling history in the rental period of the tires 1 from the vehicle on which the rented tires 1 are mounted, it is possible to estimate how the tires 1 are used during the rental period. Therefore, by estimating the remaining life of the tires 1 using the rental history and the traveling history of the tires 1, it is possible to estimate the remaining life with higher accuracy.

Further, for example, in a case where rainfall of an amount equal to or greater than an amount of rainfall set in advance is expected in the usage area and/or the usage period of the tires by the user, the controller 15 determines tires whose remaining depths of treads are equal to or greater than a predetermined value as the rental tires among the tires 1 for rental. More specifically, the controller 15 determines tires having remaining depths of treads equal to or greater than the predetermined value at which tire performance (such as maneuverability and braking performance) equal to or higher than the predetermined performance can be obtained even in a state where an amount of rainfall is equal to or greater than the amount of rainfall set in advance, as the rental tires. By this means, even in a case where rainfall of an amount equal to or greater than the amount of rainfall set in advance is expected, it is possible to determine the tires 1 for which tire performance equal to or higher than the predetermined performance can be obtained as the rental tires.

As described above, it is possible to estimate a degree of abrasion of the tires 1 on the basis of the rental history and the traveling history of the tires 1 stored in the memory 14. Initial depths of treads of the tires 1 are normally known from product information, or the like. The controller 15 can estimate the remaining depths of the treads from the initial depths of the treads of the tires 1 and the estimated degree of abrasion.

Further, the controller 15 may determine the rental tires while also taking into account an inventory status of the tires 1 for rental. For example, in a case where there are a plurality of tires 1 of different types which satisfy the condition as the rental tires, the controller 15 determines the tires 1 of a type for which an inventory level is high, as the rental tires. By determining the rental tires while also taking into account the inventory status of the tires 1 for rental in this manner, it is possible to realize reduction in inventory cost by adjusting balance of inventory levels among tires of different types.

Further, in a case where there are a plurality of tires 1 of different types which satisfy the condition as the rental tires, the controller 15 may set lower charge for rental of tires 1 of a type for which an inventory level is higher. By this means, because it is possible to increase options for the user, and lead the user to rent tires whose charge is lower, it is possible to realize reduction in inventory cost by adjusting balance of inventory levels among the tires of different types.

Further, in a case where there are a plurality of tires 1 which satisfy the condition as the rental tires, the controller 15 may set higher charge for rental of the tires 1 whose remaining life is longer (in a case where snowfall is expected), or the tires 1 whose remaining depths of treads are deeper (in a case where rainfall is expected). Typically, tire performance less degrades for tires whose degree of abrasion is less, that is, for tires whose remaining life is longer and tires whose remaining depths of treads are deeper. Therefore, by setting higher charge for the tires 1 whose remaining life is longer and the tires 1 whose remaining depths of treads are deeper, it is possible to increase options for the user in accordance with safety.

In this manner, the tire rental management apparatus 10 according to the present embodiment includes the input interface 11 configured to accept input of a usage area and/or a usage period of tires as a condition regarding rental of the tires to the user, and the controller 15 configured to determine the tires 1 in accordance with the usage area and/or the usage period input to the input interface 11 as the rental tires among a plurality of tires 1 for rental.

By accepting input of the usage area and/or the usage period of the tires by the user and determining the tires 1 in accordance with the usage area and/or the usage period as the rental tires, it is possible to determine safer tires as the rental tires in accordance with a usage environment by the user.

The tire rental management apparatus and the tire rental management method according to the present disclosure are not limited to specific configurations described in the above-described embodiment, and various modifications and changes can be made without deviating from the scope of the claims.

### REFERENCE SIGNS LIST

- 1: tire
- 2: transmitter
- 3: reader apparatus
- 10: tire rental management apparatus
- 11: input interface
- 12: output interface
- 13: acquirer
- 14: memory
- 15: controller

## Claims

1. A tire rental management apparatus which determines a rental tire which is a tire to be rented to a user who desires to rent a tire, the tire rental management apparatus comprising:
an input interface configured to accept input of a usage area and/or a usage period of a tire as a condition regarding rental of the tire to the user; and
a controller configured to determine a tire in accordance with the usage area and/or the usage period input to the input interface as the rental tire among a plurality of tires for rental.

2. The tire rental management apparatus according to claim 1, wherein, in a case where snowfall of an amount equal to or greater than an amount of snowfall set in advance is expected in the usage area and/or the usage period, the controller determines a tire having remaining life equal to or longer than a predetermined period as the rental tire among the plurality of tires.

3. The tire rental management apparatus according to claim 1 or 2,
wherein, in a case where rainfall of an amount equal to or greater than an amount of rainfall set in advance is expected in the usage area and/or the usage period, the controller determines a tire having a remaining depth of treads equal to or greater than a predetermined value as the rental tire among the plurality of tires.

4. A tire rental management method for determining a rental tire which is a tire to be rented to a user who desires to rent a tire, the tire rental management method comprising:
a step of accepting input of a usage area and/or a usage period of a tire as a condition regarding rental of the tire to the user; and
a step of determining a tire in accordance with the input usage area and/or usage period as the rental tire among a plurality of tires for rental.
